# EUROPEAN PATENT APPLICATION

(11) **EP 3 955 671 A1**
(43) Date of publication of application: **16.02.2022**
(21) Application number: 19956366.9
(22) Date of filing: 20.12.2019
(51) Int. Cl.: H04W 72/04

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Wusha, Chang'an Dongguan Guangdong 523860 (CN)
(72) Inventor: YOU, Xin, Dongguan, Guangdong 523860 (CN); SHI, Cong, Dongguan, Guangdong 523860 (CN)
(74) Representative: Taor, Simon Edward William
(86) International application number: PCT/CN2019/127138
(87) International publication number: WO 2021/120205

(57) **Abstract**

Embodiments of the present application relates to a wireless communication method, terminal apparatus, and network apparatus, which can realize the activation or deactivation of spatial relation information of PUCCH resource or the activation or deactivation of spatial relation information of PUCCH resource group with a smaller signaling overhead. The method comprises a terminal apparatus receiving first information, where the first information is used in determining that a media access control control element (MAC CE) is to activate, update, or deactivate spatial relation information of at least one physical uplink control channel (PUCCH) resource or of at least one PUCCH resource group; and the terminal apparatus activating, updating, or deactivating the spatial relation information of at least one PUCCH resource according to the MAC CE, or activating, updating, or deactivating the spatial relation information of at least one PUCCH resource group according to the MAC CE.

## Description

### BACKGROUND OF INVENTION

### Field of Invention

The present disclosure relates to communication field, and more particularly to a wireless communication method, a terminal apparatus and a network apparatus.

### Description of Prior Art

The 5th generation (5G) mobile communication system can support highfrequency communication. When the operating frequency band goes higher, the path loss during transmission will increase, which will result in a decrease in signal coverage. A solution to the above-mentioned problem is to use multiple beam transmission based on a large-scale antenna array to increase the signal coverage.

In the 5G new radio (NR) standardization process, the requirements for signaling overhead are getting increasingly stringent. Therefore, while supporting flexible beam switching, how to reduce signaling overhead is an urgent problem to be solved.

### SUMMARY OF INVENTION

The embodiment of the present disclosure provides a wireless communication method, a terminal apparatus, and a network apparatus, which can activate or deactivate the spatial relation information of PUCCH resources, or activate or deactivate the spatial relation information of PUCCH resource groups with a smaller signaling overhead.

In a first aspect, a wireless communication method is provided. The method includes: a terminal apparatus receiving first information, where the first information is used in determining that a media access control control element (MAC CE) is to activate, update, or deactivate spatial relation information of at least one physical uplink control channel (PUCCH) resource or at least one PUCCH resource group, and the terminal apparatus activating, updating, or deactivating the spatial relation information of at least one PUCCH resource according to the MAC CE, or activating, updating, or deactivating the spatial relation information of at least one PUCCH resource group according to the MAC CE.

In a second aspect, a wireless communication method is provided. The method includes: a network apparatus sending first information, where the first information is used in determining that a media access control control element (MAC CE) is to activate, update, or deactivate spatial relation information of at least one physical uplink control channel (PUCCH) resource or of at least one PUCCH resource group.

In a third aspect, a terminal apparatus is provided. The terminal apparatus is configured to execute the method in the first aspect or its various embodiments.

Specifically, the terminal apparatus includes functional modules for executing the method in the first aspect or its various embodiments.

In a fourth aspect, a network apparatus is provided. The network apparatus is configured to execute the method in the second aspect or its various embodiments.

Specifically, the network apparatus includes functional modules for executing the method in the second aspect or its various embodiments.

In a fifth aspect, a terminal apparatus is provided. The terminal apparatus includes a processor and a memory. The memory is configured to store a computer program. The processor is configured to call and run the computer program stored in the memory, and execute the method in the first aspect or its various embodiments.

In a sixth aspect, a network apparatus is provided. The network apparatus includes a processor and a memory. The memory is configured to store a computer program. The processor is configured to call and run the computer program stored in the memory, and execute the method in the second aspect or its various embodiments.

In a seventh aspect, a device is provided. The device is configured to realize the method in any one of the first aspect to the second aspect or their various embodiments.

Specifically, the device includes a processor. The processor is configured to call and run computer programs from a memory, enabling an apparatus in which the device is installed to execute the method in any one of the first aspect to the second aspect or their various embodiments.

Optionally, the device is a chip.

In an eighth aspect, a computer readable storage medium is provided. The computer readable storage medium is configured to store a computer program. The computer program enables a computer to execute the method in any one of the first aspect to the second aspect or their various embodiments.

In a ninth aspect, a computer program product is provided. The computer program product includes computer program instructions. The computer program instructions enable a computer to execute the method in any one of the first aspect to the second aspect or their various embodiments.

In a tenth aspect, a computer program is provided, which, when being executed in a computer, enables the computer to execute the method in any one of the first aspect to the second aspect or their various embodiments.

Based on the above technical solutions, through the first information, the network device can indicate that the MAC CE is configured to activate, update or deactivate the spatial relation information of the PUCCH resource groups, and can also indicate that the MAC CE is configured to activate, update or deactivate the spatial relation information of the PUCCH resources used by Thus, the signaling overhead can be saved.

### BRIEF DESCRIPTION OF DRAWINGS

FIG. 1 is a schematic diagram of a communication system architecture according to an embodiment of the present application.
FIG. 2 is a schematic diagram of a current MAC CE format.
FIG. 3 is a schematic flowchart of a wireless communication method according to an embodiment of the present application.
FIGs. 4 to 10 are schematic diagrams of the MAC CE format according to an embodiment of the present application.
FIG. 11 is a schematic block diagram of a terminal device according to an embodiment of the present application.
FIG. 12 is a schematic block diagram of a network device according to an embodiment of the present application.
FIG. 13 is a schematic block diagram of a communication device according to an embodiment of the present application.
FIG. 14 is a schematic block diagram of a device according to an embodiment of the present application.
FIG. 15 is a schematic block diagram of a communication system according to an embodiment of the present application.

### DETAILED DESCRIPTION OF PREFERRED EMBODIMENTS

The following will describe the technical solutions in the embodiments of the present application in conjunction with the accompanying figures. Obviously, the described embodiments are a part of the embodiments of the present application, rather than all of the embodiments. Based on the embodiments in this application, all other embodiments obtained by those of ordinary skill in the art without creative work are within the scope of protection of this application.

The technical solutions of the embodiments of the present application can be applied to various communication systems, such as a Global System of Mobile communication (GSM) system, Code Division Multiple Access (CDMA) System, Wideband Code Division Multiple Access (WCDMA) System, General Packet Radio Service (GPRS), Long Term Evolution (LTE) System, LTE Frequency Division Duplex (FDD) System, LTE Time Division Duplex (TDD), Advanced long term evolution (LTE-A) System, New Radio (NR) system, evolution system of NR system, LTE-based access to unlicensed spectrum (LTE-U) system, (NR-based access to unlicensed spectrum (NR-U) System, Universal Mobile Telecommunication System (UMTS), Worldwide Interoperability for Microwave Access (WiMAX) communication system, Wireless Local Area Networks (WLAN), Wireless Fidelity (Wi-Fi), next-generation communication system or other communication systems.

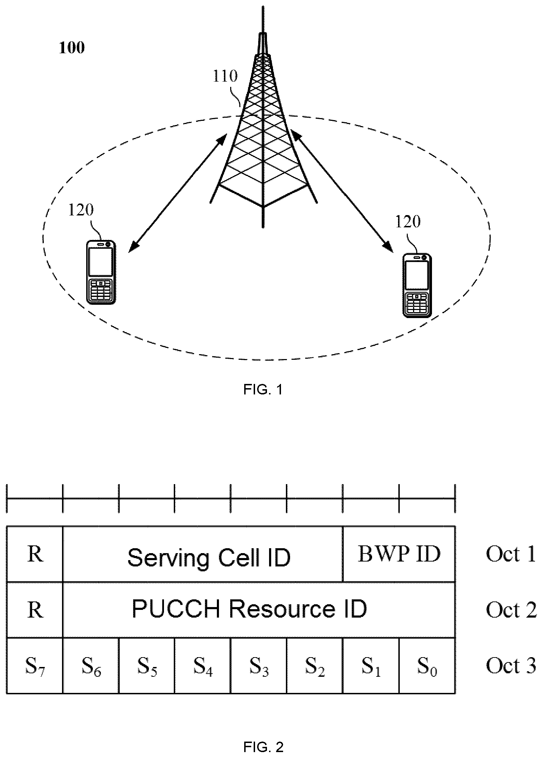

For example, a communication system 100 applied in the embodiment of the present application is shown in FIG. 1. The communication system 100 may include a network apparatus 110. The network apparatus 110 may be an apparatus that communicates with a terminal apparatus 120 (or called a communication terminal orterminal). The network apparatus 110 may provide communication coverage for a specific geographic area, and may communicate with terminal apparatuses located in the coverage area. Optionally, the network apparatus 110 may be a base station (Base Transceiver Station, BTS) in a GSM system or a CDMA system, a base station (NodeB, NB) in a WCDMA system, an evolutional base station (Evolutional Node B, eNB or eNodeB) in an LTE system, or a wireless controller in a cloud radio access network (CRAN). Or, the network apparatus may be a mobile switching center, a relay station, an access point, an in-vehicle device, a wearable device, a hub, a switch, a bridge, a router, a network-side apparatus in 5G network, or a network apparatus in an evolving public land mobile network (PLMN) in the future.

The communication system 100 further includes at least one terminal apparatus 120 located within the coverage area of the network apparatus 110. The "terminal apparatus" mentioned in the description may be any terminal device including but not limited to: a device configured to transmitting/receiving communication signals and/or an Internet of things (loT) device connected via a wireline connection, such as a Public Switched Telephone Networks (PSTN), Digital Subscriber Line (DSL), digital cable, or direct cable connection; and/or via another data connection/network; and/or via a wireless interface, such as for cellular networks, Wireless Local Area Network (WLAN), digital television networks such as DVB-H networks, satellite networks, and AM-FM broadcast transmitters. A terminal device configured to communicate via a wireless interface may be referred to as a "wireless communication terminal," "wireless terminal," or "mobile terminal." Examples of a mobile terminal include, but are not limited to, a satellite phone or a cellular phone; a Personal Communications System (PCS) terminal that combines capabilities of a cellular radio telephony, data processing, fax, and data communication; a personal digital assistant (PDA) integrating a radio telephone, a pager, Internet/Intranet access, a Web browser, notepads, calendars, and/or a Global Positioning System (GPS) receiver; and a conventional laptop and/or handheld receivers, or other electronic devices that include a radio telephone transceiver. The terminal device may refer to an access terminal, user equipment (UE), user unit, user station, mobile station, mobile station, remote station, remote terminal, mobile device, user terminal, terminal, wireless communication device, user agent, or user device. The access terminal may be a cellular telephone, cordless telephone, Session Initiation Protocol (SIP) telephone, Wireless Local Loop (WLL) station, Personal Digital Assistant (PDA), handheld device with handheld devices with wireless communication capabilities, computing devices or other processing devices connected to wireless modems, in-vehicle device, wearable device, terminal device in 5G networks, or terminal device in future evolved PLMNs.

Optionally, device-to-device (D2D) communication can be carried out between the terminal apparatuses 120.

Optionally, 5G system or 5G network can also be called New Radio (NR) system or NR network.

FIG. 1, for example, shows one network apparatus and two terminal apparatuses. Optionally, the communication system 100 may include a plurality of network apparatuses, and the coverage area of each network apparatus may include different numbers of terminal apparatuses, which is not limited in the embodiment of the application.

Optionally, the communication system 100 may also include other network entities, such as a network controller and a mobility management entity, which is not limited in the embodiment of the present application.

It should be noted, an apparatus with communication function in the network/system in the embodiment of the present application may be referred to as a communication apparatus. Take the communication system 100 shown in FIG. 1 as an example, communication apparatus may include the network apparatus 110 and the terminal apparatus 120 with communication function. The network apparatus 110 and the terminal apparatus 120 may be the specific apparatus mentioned above, and will not be repeated here. The communication apparatus may also include other apparatus in the communication system 100, e.g., a network controller, a mobility management entity, and other network entities, which is not limited to the embodiments of this application.

It should also be noted, the communication system 100 shown in FIG. 1 may also be a non-terrestrial network (NTN) system, that is, the network apparatus 110 in FIG. 1 may be a satellite.

It should be noted, the terms "system" and "network" in this article are often used interchangeably in this article.

In R15 protocol, to support flexible switching of transmitting beams, a network apparatus can configure a Physical Uplink Control Channel (PUCCH) spatial relation information pool through radio resource control (RRC) signaling, then select an instance of PUCCH spatial relation information in the PUCCH spatial relation information pool through media access control (MAC) control element (CE) for each PUCCH resource. That is, the MAC CE can be used to activate or deactivate the spatial relation information of PUCCH resources. The format of the MAC CE can be as shown in FIG. 2. As depicted in FIG. 2, the size of the MAC CE is 24 bits, which specifically includes the following fields:
Serving Cell ID field: This field is used to indicate an identifier (ID) of a serving cell to which MAC CE applies, and a length of this field is 5 bits;
Bandwidth Part (BWP) ID field: a length of this field is 2 bits;
PUCCH Resource ID field: a length of this field is 7 bits;
*Sᵢ* field: This field can be used to indicate the activation status of the spatial relation information of the PUCCH resource, *Sᵢ* field is set to "1" to indicate that the spatial relation information corresponding to the field is in an active state, Si field is set to "0" to indicate that the spatial relation information corresponding to the field is in a deactivated state, and it should be noted, only one spatial relation information can be activated for one PUCCH resource at a time; and
R field: The bits in this field are reserved bits, and the reserved bits are set to "0".

In the MAC CE, the network apparatus may configure at most 8 instances of spatial relation information for the terminal apparatus, so the MAC CE uses an 8-bit bitmap to correspond to the 8 instances of spatial relation information. A bit in the bitmap when being set to 1, e.g., *S*₆ is set to 1, can indicate that the PUCCH resource will use the spatial relation information corresponding to *S*₆.

Based on the latest conference conclusion, the number of spatial relation information that R16 can support has been increased to 64. Additionally, R16 also supports the activation of the spatial relation information of every PUCCH resource group. That is, the network apparatus can be configured with up to 4 different PUCCH resource groups through radio resource control (RRC), and each PUCCH resource group can include a plurality of PUCCH resources. In this case, without increasing the MAC CE signaling overhead, how to instruct the activation or deactivation of the spatial relation information of the PUCCH resource or of the PUCCH resource group is an urgent problem to be solved.

Accordingly, an embodiment of the present application provides a wireless communication method, which can realize the activation or deactivation of the spatial relation information of the PUCCH resources, or the activation or deactivation of the spatial relation information of the PUCCH resource group with a smaller signaling overhead.

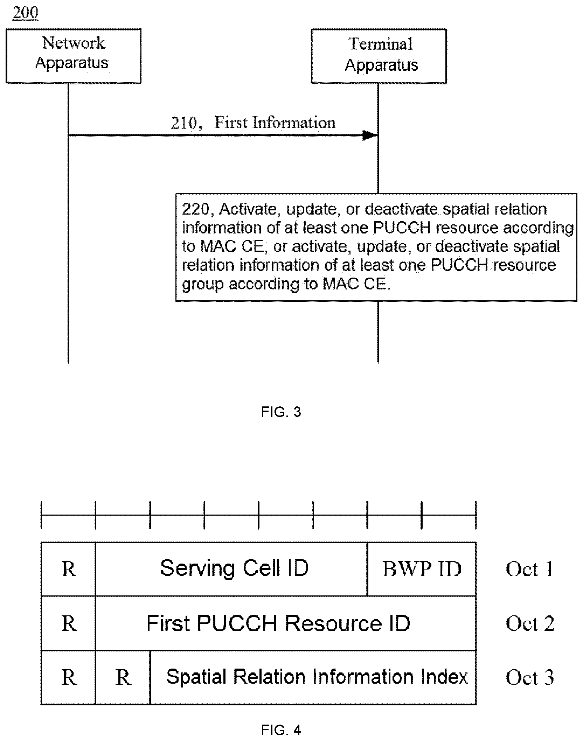

FIG. 3 is a schematic flowchart showing a method 200 of wireless communication according to an embodiment of the present application. The method described in FIG. 3 may be executed by a terminal apparatus and a network apparatus. The terminal apparatus may be, for example, the terminal apparatus 120 shown in FIG. 1, and the network apparatus may be, for example, the network apparatus 110 shown in FIG. 1. As shown in FIG. 3, the method 200 may include at least one part of the following content.

In 210, the terminal apparatus receives first information. The first information is used in determining that a MAC CE is to activate, update, or deactivate spatial relation information of at least one PUCCH resource or spatial relation information of at least one PUCCH resource group.

Correspondingly, the network apparatus can send the first information to the terminal apparatus.

In 220, the terminal apparatus activates, updates, or deactivates the spatial relation information of the at least one PUCCH resource according to the MAC CE, or the terminal apparatus activates, updates, or deactivates the spatial relation information of the at least one PUCCH resource group according to the MAC CE.

The "activate" and "update" in the above content can be used interchangeably. Of course, "activate" and "update" can also be expressed as other terms, which are not limited to the embodiments of this application. For ease of description, in the following text, "activate or deactivate" will represent "activate, update, or deactivate." Additionally, an example where a MAC CE is used to activate or deactivate the spatial relation information of a PUCCH resource (e.g., a first PUCCH resource) or the spatial relation information of a PUCCH resource group (e.g., a first PUCCH resource group) is detailed in the following. The first PUCCH resource group includes the first PUCCH resource, the at least one PUCCH resource includes the first PUCCH resource, and the at least one PUCCH resource group includes the first PUCCH resource.

In the following, the schemes of the embodiments of the application will be detailed in conjunction with four embodiments.

### Embodiment 1:

The first information may be a logical channel identifier (LCID) of the MAC CE. That is, after receiving the MAC CE, the terminal apparatus can determine whether the MAC CE is used to activate or deactivate the spatial relation information of the first PUCCH resource or the spatial relation information of the first PUCCH resource group based on the LCID in a sub-header of a MAC sublayer protocol data unit (PDU).

Optionally, a possible correspondence between the values of LCID and the indices can be shown in Table 1.

**Table 1**

| Index | LCID values |
|---|---|
| 0 | Common Control Channel (CCCH) |
| 1-32 | Identity of the logical channel |
| 33-44 | Reserved |
| 45 | Group-based PUCCH spatial relation Activation/Deactivation |
| 46 | Enhanced PUCCH spatial relation Activation/Deactivation |
| 47 | Recommended bit rate |
| 48 | SP ZP CSI-RS (Semi-Persistent Zero Power Channel Status Information Reference Signal) Resource Set Activation/Deactivation |
| 49 | PUCCH spatial relation Activation/Deactivation |
| 50 | SP SRS (Semi-Persistent Sounding Reference Signal) Activation/Deactivation |
| 51 | SP CSI reporting on PUCCH Activation/Deactivation |
| 52 | TCI (Transmission Configuration Indicator) State Indication for UE (terminal apparatus) specific PDCCH |
| 53 | TCI States Activation/Deactivation for UE-specific PDSCH |
| 54 | Aperiodic CSI Trigger State Subselection |
| 55 | SP CSI-RS / CSI-IM (Interference Measurement) Resource Set Activation/Deactivation) |
| 56 | Duplication Activation/Deactivation |
| 57 | SCell Activation/Deactivation (four octet) |
| 58 | SCell (Secondary Cell) Activation/Deactivation (one octet) |
| 59 | Long DRX (Discontinuous Reception) Command |
| 60 | DRX Command |
| 61 | Timing Advance Command |
| 62 | UE Contention Resolution Identity |
| 63 | Padding |

In Table 1, index 0 to index 63 represent different LCID values, and different LCID values have different meanings. When the first information is the LCID value corresponding to index 45, the terminal apparatus can determine that MAC CE is used to activate or deactivate the spatial relation information of the first PUCCH resource group. When the first information is the LCID value corresponding to index 46, the terminal apparatus can determine that the MAC CE is used to activate or deactivate the spatial relation information of the first PUCCH resource.

It should be noted, the corresponding relationship between the index and the LCID value shown in table 1 is only a specific implementation of the embodiment of the present application and does not limit the embodiment of the present application. Any corresponding relationship obtained from modification of this is within the scope of protection of the present application.

For example, the LCID value corresponding to index 45 may be the activation or deactivation of the spatial relation information of the enhanced PUCCH resource, and the LCID value corresponding to the index 46 may be the activation or deactivation of the spatial relation information of the PUCCH resource group.

Further, the MAC CE may include a first field, and the first field is used to indicate the ID of the first PUCCH resource.

When the terminal apparatus determines that the MAC CE is used for the activation or deactivation of the spatial relation information of the PUCCH resource based on the LCID, the terminal apparatus can determine that the MAC CE is used to activate or deactivate the spatial relation information of the first PUCCH resource according to the ID of the first PUCCH resource indicated by the first field.

When the terminal apparatus determines that the MAC CE is used to activate or deactivate the spatial relation information of the PUCCH resource group based on the LCID, the terminal apparatus can determine that the MAC CE is used to activate or deactivate the spatial relation information of the resource group to which the first PUCCH resource belongs (i.e., the first PUCCH resource group) according to the ID of the first PUCCH resource indicated by the first field

Further, the MAC CE may also include a second field. In one embodiment, the second field may be used to indicate the index of the spatial relation information that is activated or deactivated.

The second field can occupy 6 bits, which can represent up to 64 types of spatial relation information. For example, the indexes of the 64 types of spatial relation information are 0, 1, 2, ..., 63, respectively. Index 0 represents spatial relation information 0, index 1 represents spatial relation information 1, and so on. When the second field is "000101", the terminal apparatus can determine that the MAC CE is used to activate spatial relation information 5.

FIG. 4 is a possible schematic diagram of the MAC CE. In FIG. 4, Oct represents an octet, and R is a reserved bit, usually set to "0". The first field in FIG. 4 is the first PUCCH resource ID field, and the second field is the spatial relation information index field. When the second field is "000101" and the index corresponding to the LCID value is 45, the terminal apparatus can determine that the MAC CE is used to activate the spatial relation information 5 of the first PUCCH resource group.

In another embodiment, the second field can be used to indicate the bitmap of the spatial relation information that is activated or deactivated.

Each bit in the bitmap can represent an index of spatial relation information. *Sᵢ* being set to"1" means that the corresponding spatial relation information is activated. *Sᵢ* being set to "0" means that the corresponding spatial relation information is deactivated. There can be 64 types of bitmaps, and the 64 types of bitmaps can one-to-one correspond to 64 types of spatial relation information, respectively.

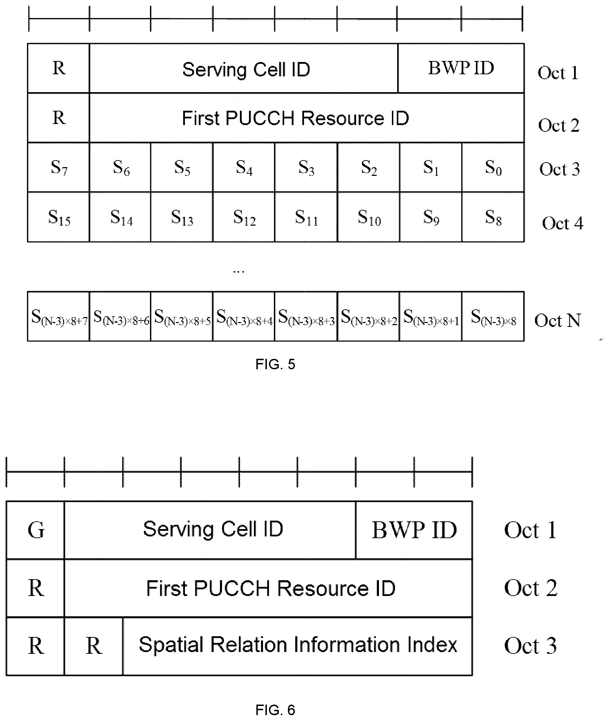

FIG. 5 is another possible schematic diagram of the MAC CE. For example, *S*₀ can correspond to spatial relation information 0, and *S*₁ can correspond to spatial relation information 1. N can be equal to 10, in this case, *S*_{(N-3)*8+7} =*S*₆₃, and *S*₆₃ can correspond to spatial relation information 63.

When *S*₁₂ is set to "1" and other bits in the bitmap are set to "0" it means that the spatial relation information activated by the MAC CE is spatial relation information 12. Further, when the index corresponding to the LCID value is 45, it means that the MAC CE is used to activate the spatial relation information 12 of the first PUCCH resource group.

### Embodiment 2:

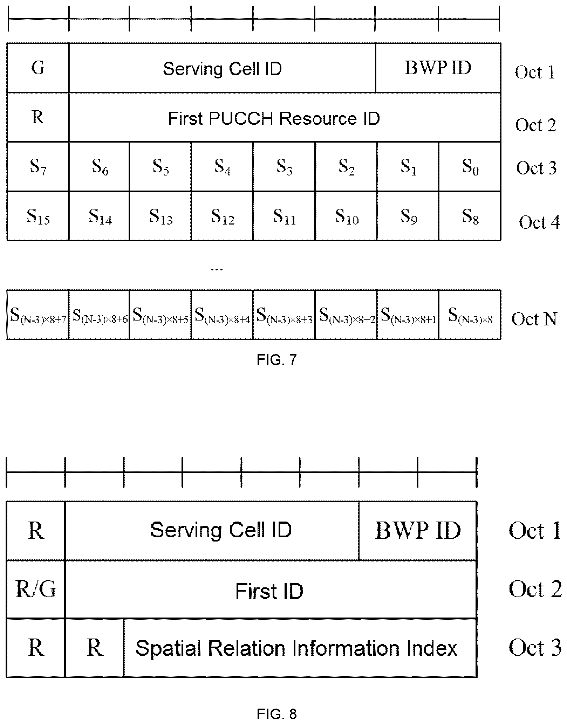

The first information can be the first reserved bit in the MAC CE. FIGs. 6 and 7 are two possible schematic diagrams of the MAC CE in the embodiment 2.

It can be seen that the first reserved bit is the "G" bit in FIGs. 6 and 7. When G is set to "1", it can indicate that the MAC CE is used to activate or deactivate the spatial relation information of the first PUCCH resource, and when G is set to "0", it may indicate that the MAC CE is used to activate or deactivate the spatial relation information of the first PUCCH resource group to which the first PUCCH resource belongs. Or, when G is set to "1", it may indicate that the MAC CE is used to activate or deactivate the spatial relation information of the first PUCCH resource group to which the first PUCCH resource belongs, and when G is set to "1", it can indicate that the MAC CE is used to activate or deactivate the spatial relation information of the first PUCCH resource.

Further, the MAC CE may also include a first field and a second field. The first field is used to indicate the ID of the first PUCCH resource, and the second field may be used to indicate the index of the activated or deactivated spatial relation information, as shown in FIG. 6. Or, the second field can be used to indicate the bitmap of the spatial relation information that is activated or deactivated, as shown in FIG. 7.

Certainly, the first reserved bit can also be other reserved bits in the MAC CE. For example, the first reserved bit can be a reserved bit in FIGs. 6 and 7 that is in the same byte as the first field. For another example, when the format of the MAC CE is the format shown in FIG. 6, the first reserved bit can be any reserved bit that is in the same byte as the second field.

Or, the first reserved bit can include a plurality of reserved bits. Taking FIG. 7 as an example, the first reserved bit can be the "G" bit and the "R" bit in FIG. 7. For example, when these two bits are the same, it can indicate that the MAC CE is used to activate or deactivate the spatial relation information of the first PUCCH resource group. When the two bits are different, it can indicate that the MAC CE is used to activate or deactivate the spatial relation information of the first PUCCH resource. For example, when the "G" bit and the "R" bit are both set to "1", it means that the MAC CE is used to activate or deactivate the spatial relation information of the first PUCCH resource group. When the "G" bit is set to "1" and "R" "Bit is set to "0", it means that the MAC CE is used to activate or deactivate the spatial relation information of the first PUCCH resource.

For example, when the two bits are the same and both are "1", it may indicate that the MAC CE is used to activate or deactivate the spatial relation information of the first PUCCH resource group. When the two bits are the same and both are "0", it can indicate that the MAC CE is used to activate or deactivate the spatial relation information of the first PUCCH resource.

### Embodiment 3:

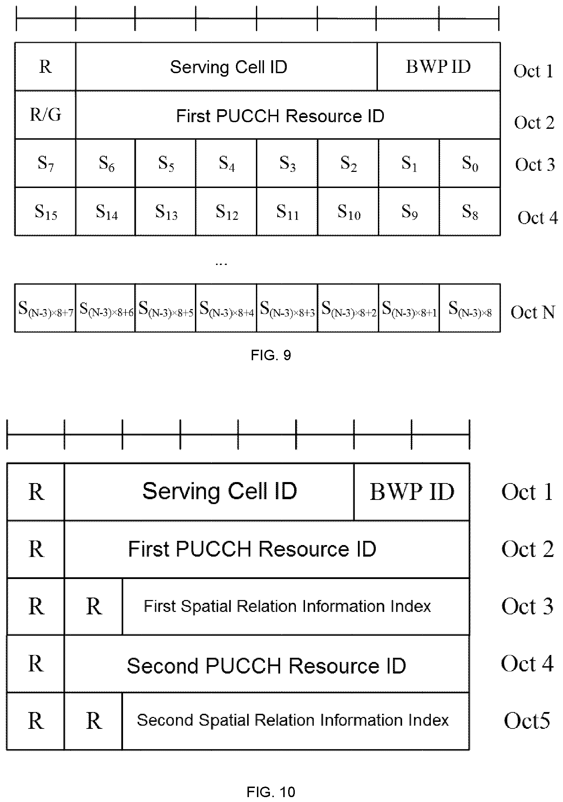

The first information can be the second reserved bit in the MAC CE. FIGs. 8 and 9 are two possible schematic diagrams of the MAC CE in the embodiment 3.

As illustrated, the second reserved bit can be the "R/G" bit in FIGs. 8 and 9. When R/G is set to "1", it can indicate that the MAC CE is used to activate or deactivate the spatial relation information of the first PUCCH resource. When R/G is set to "0", it can indicate that the MAC CE is used to activate or deactivate the spatial relation information of the first PUCCH resource group to which the first PUCCH resource belongs. Or, when R/G is set to "1", it can indicate that the MAC CE is used to activate or deactivate the spatial relation information of the first PUCCH resource group to which the first PUCCH resource belongs. When R/G is set to "1", it can indicate the MAC CE is used to activate or deactivate the spatial relation information of the first PUCCH resource.

Further, the MAC CE may include a first field, which is used to indicate the first ID. The "R/G" bit can be used to indicate whether the first ID is the ID of the first PUCCH resource or the ID of the first PUCCH resource group. That is, the terminal apparatus may determine whetherthe first ID is the ID of the first PUCCH resource orthe ID of the first PUCCH resource group according to the "R/G" bit.

When the first ID is the ID of the first PUCCH resource, the terminal apparatus can determine that the MAC CE is used to activate or deactivate the spatial relation information of the first PUCCH resource. When the first ID is the ID of the first PUCCH resource group, the terminal apparatus can determine that the MAC CE is used to activate or deactivate the spatial relation information of the first PUCCH resource group.

Further, the MAC CE may also include a second field. The second field may indicate the index of the activated or deactivated spatial relation information, as shown in FIG. 8. Or, the second field can be used to indicate the bitmap of the spatial relation information that is activated or deactivated, as shown in FIG. 9

Similar to the embodiment 2, the second reserved bit may also be other reserved bits in the MAC CE. A specific embodiment manner may be referenced to the related description in embodiment 2, which will not be repeated here.

### Embodiment 4:

In the embodiment 4, the first information may be configuration information.

As an example, when the configuration information includes the first PUCCH resource group, the terminal apparatus may determine that the spatial relation information activated or deactivated by the MAC CE is used for the entire first PUCCH resource group. When the configuration information does not include the first PUCCH resource group, the terminal apparatus can determine that the spatial relation information activated or deactivated by the MAC CE is used for the first PUCCH resource.

That is, after the terminal apparatus receives the MAC CE, it determines whether the network apparatus is configured with the first PUCCH resource group. When the network apparatus is configured with the first PUCCH resource group, the terminal apparatus can determine that the MAC CE is used to activate or deactivate the spatial relation information of the first PUCCH resource group. When the network apparatus is not configured with the first PUCCH resource group, the terminal apparatus can determine that the MAC CE is used to activate or deactivate the spatial relation information of the first PUCCH resource.

Optionally, the configuration information that does not include the first PUCCH resource group may be: the configuration information includes the first PUCCH resource.

Or, when the configuration information includes the first PUCCH resource, the terminal apparatus can determine that the spatial relation information activated or deactivated by the MAC CE is used for the first PUCCH resource. When the configuration information does not include the first PUCCH resource, then the terminal apparatus can determine that the spatial relation information activated or deactivated by the MAC CE is used for the first PUCCH resource group.

As another example, when the configuration information includes a first parameter, the terminal apparatus may determine that the activated or deactivated spatial relation information is used for the entire first PUCCH resource group. When the configuration information does not include the first parameter, then the terminal apparatus can determine that the spatial relation information activated or deactivated by the MAC CE is used for the first PUCCH resource.

There is an association relationship between the first parameter and the first PUCCH resource group. The above association relationship may be configured by the network apparatus or may be preset by the protocol.

It should be noted, although the embodiments 1 to 4 are described above respectively, this does not mean that the embodiments 1 to 4 are mutually independent. The description of each embodiment can refer to each other. For example, the related description of the first field and the second field in the embodiment 1 can be applied to the embodiments 2 to 4. For brevity of content, the embodiments 2 to 4 will be not overly detailed here.

The above describes in detail the technical solution for the MAC CE to activate or deactivate the spatial relation information of a PUCCH resource or the spatial relation information of a PUCCH resource group. The MAC CE in the embodiments of the present application can also activate or deactivate the spatial relation information of a plurality of PUCCH resources or the spatial relation information of a plurality of PUCCH resource groups.

Taking FIG. 10 as an example, the MAC CE shown in FIG. 10 is based on the MAC CE shown in FIG. 4 with two additional bytes. As shown in FIG. 10, the MAC CE can activate or deactivate the spatial relation information of the two PUCCH resources (i.e., the first PUCCH resource and the second PUCCH resource) or the spatial relation information of two PUCCH resource groups (i.e., the resource group to which the first PUCCH resource belongs and the resource group to which the second PUCCH resource belongs).

For example, when the index corresponding to the LCID value is 46, the first spatial relation information index is "010100", and the second spatial relation information index is "11001", the terminal apparatus can determine that the MAC CE is used to activate the spatial relation information 20 of the first PUCCH resource and the spatial relation information 49 of the second PUCCH resource.

It should be noted, in the embodiments of the present application, "first" and "second" are only to distinguish different objects, but do not limit the scope of the embodiments of the present application.

In the embodiment of the present application, with the first information, the network apparatus can indicate that the MAC CE is used to activate, update, or deactivate the spatial relation information of the PUCCH resource group, and can also indicate that the MAC CE is used to activate, update, or deactivate the spatial relation information of the PUCCH resource, thus, to reduce signaling overhead.

The preferred embodiments of the present application are described in detail above in conjunction with the attached figures, but the present application is not limited to the specific details in the above-mentioned embodiments. Within the scope of the technical concept of the present application, a variety of simple modifications can be made to the technical solution of the present application, and these simple modifications all belong to the scope of protection of the present application.

For example, the various specific technical features described in the above specific embodiments can be combined in any suitable manner without contradiction. To avoid unnecessary repetition, this application no longer discusses various possible combinations.

For another example, the different embodiments of the present application can also be combined arbitrarily, as long as it does not violate the idea of the present application, and should also be regarded as the content disclosed in this application.

It should be noted, in the various method embodiments of the present application, the sequence numbers of the foregoing process steps do not mean the order of execution. The execution order of each process should be determined by its function and internal logic, and should not constitute any limitation to the implementation of the present application.

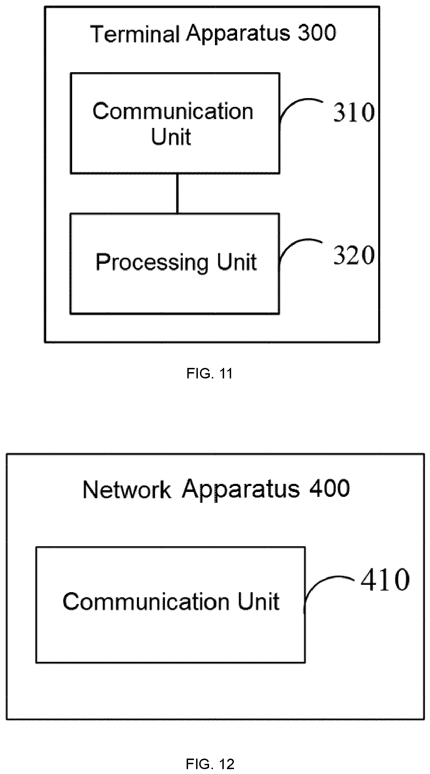

The wireless communication method according to the embodiment of the present application has been detailed above. The communication devices according to the embodiments of the present application will be described in conjunction with FIGs. 11-13, and the technical features described in the method embodiments are applicable to the following device embodiments.

FIG. 11 shows a schematic block diagram of the terminal apparatus 300 according to an embodiment of the present application. As shown in FIG. 11, the terminal apparatus 300 includes:
a communication unit 310 configured to receive first information, where the first information is used in determining that a media access control control element (MAC CE) is to activate, update, or deactivate spatial relation information of at least one physical uplink control channel (PUCCH) resource or spatial relation information of at least one PUCCH resource group; and
a processing unit 320 configured to activate, update, or deactivate the spatial relation information of the at least one PUCCH resource according to the MAC CE, or activate, update, or deactivate the spatial relation information of the at least one PUCCH resource group according to the MAC CE.

Optionally, in the embodiment of the present application, the first information is the logical channel identification LCID of the MAC CE.

Optionally, in the embodiment of the present application, the first information is a first reserved bit of the MAC CE.

Optionally, in the embodiment of the present application, the MAC CE includes an identifier of a first PUCCH resource, the first reserved bit is used to indicate that the MAC CE is used to activate, update, or deactivate the spatial relation information of the first PUCCH resource, orthe first reserved bit is used to indicate that the MAC CE is used to activate, update, or deactivate the spatial relation information of a resource group to which the first PUCCH resource belongs, and the at least one PUCCH resource includes the first PUCCH resource.

Optionally, in the embodiment of the present application, the first information is a second reserved bit of the MAC CE.

Optionally, in the embodiment of the present application, the MAC CE includes a first ID, the second reserved bit is used to indicate that the first ID is an ID of a first PUCCH resource, or the second reserved bit is used to indicate that the first ID is an ID of a first PUCCH resource group, the at least one PUCCH resource comprises the first PUCCH resource, and the at least one PUCCH resource group includes the first PUCCH resource group, wherein:
when the first ID is the ID of the first PUCCH resource, the MAC CE is used to activate, update, or deactivate the spatial relation information of the first PUCCH resource; and
when the first ID is the ID of the first PUCCH resource group, the MAC CE is used to activate, update, or deactivate the spatial relation information of the first PUCCH resource group.

Optionally, in the embodiment of the present application, the first information is configuration information, wherein:
when the configuration information comprises the at least one PUCCH resource group, the MAC CE is used to activate, update, or deactivate the spatial relation information of the at least one PUCCH resource group; and
when the configuration information doesn't comprise the at least one PUCCH resource group, the MAC CE is used to activate, update, or deactivate the spatial relation information of the at least one PUCCH resource.

Optionally, in the embodiment of the present application, the MAC CE includes an index of the spatial relation information activated, updated, or deactivated.

Optionally, in the embodiment of the present application, the index of the spatial relation information is carried in a field of 6 bits.

Optionally, in the embodiment of the present application, the MAC CE includes a bitmap of the spatial relation information activated, updated, or deactivated.

Optionally, in the embodiment of the present application, the bitmap is one of 64 types of bitmaps included in the MAC CE, wherein the 64 types of bitmaps one-to-one correspond to 64 types of spatial relation information respectively.

It should be noted, the terminal apparatus 300 can correspond to the terminal apparatus in the method 200, and can realize the corresponding operations of the terminal apparatus in the method 200, which for brevity, will not be repeated here.

FIG. 12 shows a schematic block diagram of the network apparatus 400 of an embodiment of the present application. As shown in FIG. 12, the network apparatus 400 includes:
a communication unit 410 configured to send first information, where the first information is used in determining that a media access control control element (MAC CE) is to activate, update, or deactivate spatial relation information of at least one physical uplink control channel (PUCCH) resource or of at least one PUCCH resource group.

Optionally, in the embodiment of the present application, the first information is the logical channel identification LCID of the MAC CE.

Optionally, in the embodiment of the present application, the first information is a first reserved bit of the MAC CE.

Optionally, in the embodiment of the present application, the MAC CE includes an identifier of a first PUCCH resource, the first reserved bit is used to indicate that the MAC CE is used to activate, update, or deactivate the spatial relation information of the first PUCCH resource, orthe first reserved bit is used to indicate that the MAC CE is used to activate, update, or deactivate the spatial relation information of a resource group to which the first PUCCH resource belongs, and the at least one PUCCH resource includes the first PUCCH resource.

Optionally, in the embodiment of the present application, the first information is a second reserved bit of the MAC CE.

Optionally, in the embodiment of the present application, the MAC CE includes a first ID, the second reserved bit is used to indicate that the first ID is an ID of a first PUCCH resource, orthe second reserved bit is used to indicate that the first ID is an ID of a first PUCCH resource group, the at least one PUCCH resource comprises the first PUCCH resource, and the at least one PUCCH resource group includes the first PUCCH resource group, wherein:
when the first ID is the ID of the first PUCCH resource, the MAC CE is used to activate, update, or deactivate the spatial relation information of the first PUCCH resource; and
when the first ID is the ID of the first PUCCH resource group, the MAC CE is used to activate, update, or deactivate the spatial relation information of the first PUCCH resource group.

Optionally, in the embodiment of the present application, the first information is configuration information, wherein when the configuration information comprises the at least one PUCCH resource group, the MAC CE is used to activate, update, or deactivate the spatial relation information of the at least one PUCCH resource group; and
when the configuration information doesn't comprise the at least one PUCCH resource group, the MAC CE is used to activate, update, or deactivate the spatial relation information of the at least one PUCCH resource.

Optionally, in the embodiment of the present application, the MAC CE includes an index of the spatial relation information activated, updated, or deactivated.

Optionally, in the embodiment of the present application, the index of the spatial relation information is carried in a field of 6 bits.

Optionally, in the embodiment of the present application, the MAC CE includes a bitmap of the spatial relation information activated, updated, or deactivated.

Optionally, in the embodiment of the present application, the bitmap is one of 64 types of bitmaps included in the MAC CE, the 64 types of bitmaps one-to-one correspond to 64 types of spatial relation information respectively.

It should be noted, the network apparatus 400 can correspond to the network apparatus in the method 200, and can realize the corresponding operations of the network apparatus in the method 200, which, for brevity, will not be repeated here.

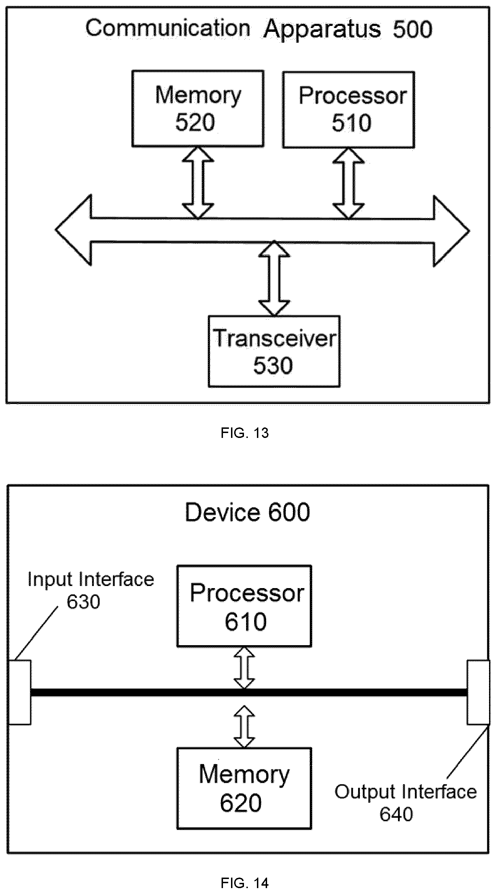

FIG. 13 is a schematic structural diagram of a communication apparatus 500 provided by an embodiment of the present application. In particular, the communication apparatus 500 shown in FIG. 13 includes a processor 510. The processor 510 can call and run a computer program from a memory to implement the method in the embodiments of the present application.

Optionally, as shown in FIG. 13, the communication apparatus 500 may further include a memory 520. In particular, the processor 510 may call and run the computer program from the memory 520 to implement the method in the embodiments of the present application.

The memory 520 may be a separate device independent of the processor 510 or be integrated into the processor 510.

Optionally, as shown in FIG. 13, the communication apparatus 500 may also include a transceiver 530. The processor 510 may control the transceiver 530 to communicate with other apparatuses. Specifically, it may send information or data to other apparatuses, or receive information or data sent by other apparatuses.

In particular, the transceiver 530 may include a transmitter and a receiver. The transceiver 530 may further include an antenna. The number of antennas may be one or more.

Optionally, the communication apparatus 500 may specifically be the network apparatus of the embodiment of the present application, and the communication apparatus 500 may implement the corresponding processes implemented by the network apparatus in the various methods of the embodiments of the present application, which, for the sake of brevity, are not repeated here.

Optionally, the communication apparatus 500 may specifically be the terminal apparatus of the embodiment of the present application, and the communication apparatus 500 may implement the corresponding processes implemented by the terminal apparatus in the various methods of the embodiments of the present application, which for brevity, are not repeated here.

FIG. 14 is a schematic structural diagram of a device of the embodiment of the present application. The device 600 shown in FIG. 14 includes a processor 610. The processor 610 can call and run a computer program from a memory to implement the methods in the embodiments of the present application.

Optionally, as shown in FIG.14, the device 600 may also include a memory 620. The processor 610 may call and run a computer program from the memory 620 to implement the method in the embodiment of the present application.

In particular, the memory 620 may be a separate device independent of the processor 610 or be integrated into the processor 610.

Optionally, the device 600 may also include an input interface 630. The processor 610 may control the input interface 630 to communicate with other apparatuses or chips, and specifically, may obtain information or data sent by the other apparatuses or the chips.

Optionally, the device 600 may also include an output interface 640. The processor 610 may control the output interface 640 to communicate with other apparatuses or chips, and specifically, may output information or data to the other apparatuses or the chips.

Optionally, the device can be applied to the terminal apparatus in the embodiments of the present application, and the device can implement the corresponding processes implemented by the terminal apparatus in the various methods of the embodiments of the present application, which for brevity, are not repeated here.

Optionally, the device can be applied to the network apparatus in the embodiments of the present application, and the device can implement the corresponding processes implemented by the network apparatus in the various methods of the embodiments of the present application, which for brevity, are not repeated here.

Optionally, the device 600 may be a chip. It should be noted, the chip mentioned in the embodiments of the present application may also be called a system-level chip, a system chip, a chip system, or a chip of system-on-a-chip, etc.

It should be noted, the processor of the embodiment of the present application may be an integrated circuit chip with signal processing capability. In an implementation process, each step of the above method embodiments can be completed by an integrated logic circuit of hardware in a processor or instructions in the form of software. The above-mentioned processor can be a general processor, a digital signal processor (DSP), an application specific integrated circuit (ASIC), a field programmable gate array (FPGA), other programmable logic devices, a discrete gate, a transistor logic device, or a discrete hardware component, which can implement or execute the methods, steps, and logical block diagrams disclosed in the embodiments of the present application. The general processor may be a microprocessor or any conventional processor, etc. The combination of the steps of the methods disclosed in the embodiments of the present application may be directly embodied as being executed and completed by a hardware decoding processor, or executed and completed by a combination of hardware and software modules in the decoding processor. The software module can be located in a random access memory, a flash memory, a read-only memory, a programmable read-only memory, an electrically erasable programmable memory, a register, and other well-developed storage medium in the art. The storage medium is located in the memory. The processor reads the information in the memory and completes the steps of the above methods in combination with its hardware.

It should be noted, the memory in the embodiments of the present application may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. Illustratively but not restrictively, many forms of RAM can be used, such as static RAM (SRAM), dynamic RAM (DRAM), synchronous DRAM (SDRAM), double data rate SDRAM (DDR SDRAM), enhanced SDRAM (ESDRAM), synchlink DRAM (SLDRAM), and direct rambus RAM (DR RAM). It should be noted, the memory of the system and the method described herein is intended to include but not limited to these and any other suitable types of memory.

It should be noted, the above-mentioned memory is illustrative but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM), etc. That is, the memory in the embodiments of the present application is intended to include but are not limited to these and any other suitable types of memory.

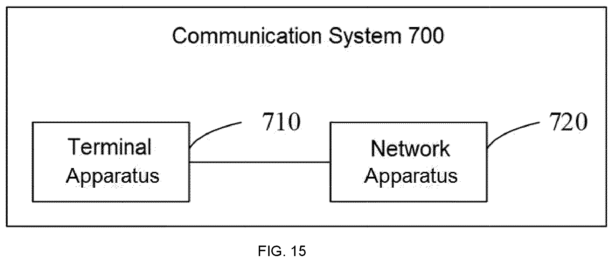

FIG. 15 is a schematic block diagram of a communication system 700 provided by the embodiments of the present application. As shown in FIG. 15, the communication system 700 includes the terminal apparatus 710 and the network apparatus 720

The terminal apparatus 710 can be used to implement the corresponding functions implemented by the terminal apparatus in the above methods, and the network apparatus 720 can be used to implement the corresponding functions implemented by the network apparatus in the above methods, which, for brevity, will not be repeated here.

The embodiments of the present application also provided a computer readable storage medium, which is configured to store a computer program.

Optionally, the computer readable storage medium can be applied to the terminal apparatus in the embodiments of the present application, and the computer program enables the computer to execute the corresponding processes implemented by the terminal apparatus in the various methods of the embodiments of the present application, which, for brevity, will not be repeated here.

Optionally, the computer readable storage medium can be applied to the network apparatus in the embodiments of the present application, and the computer program enables the computer to execute the corresponding processes implemented by the network apparatus in the various methods of the embodiments of the present application, which, for brevity, will not be repeated here.

The embodiments of the present application also provided a computer program product, which includes computer program instructions.

Optionally, the computer program product can be applied to the terminal apparatus in the embodiments of the present application, and the computer program product enables the computer to execute the corresponding processes implemented by the terminal apparatus in the various methods of the embodiments of the present application, which, for brevity, will not be repeated here.

Optionally, the computer program product can be applied to the network apparatus in the embodiments of the present application, and the computer program product enables the computer to execute the corresponding processes implemented by the network apparatus in the various methods of the embodiments of the present application, which, for brevity, will not be repeated here.

The embodiments of the present application also provided a computer program.

Optionally, the computer program can be applied to the terminal apparatus in the embodiments of the present application, and the computer program enables the computer to execute the corresponding processes implemented by the terminal apparatus in the various methods of the embodiments of the present application, which, for brevity, will not be repeated here.

Optionally, the computer program can be applied to the network apparatus in the embodiments of the present application, and the computer program enables the computer to execute the corresponding processes implemented by the network apparatus in the various methods of the embodiments of the present application, which, for brevity, will not be repeated here.

A person of ordinary skill in the art may be aware that, in combination with the units and algorithm steps described in the embodiments disclosed herein, the present disclosure can be implemented by electronic hardware or a combination of computer software and electronic hardware. Whether these functions are performed in hardware or software depends on the specific application and design constraints of the technical solution. Professional technicians can use different methods for each specific application to implement the described functions, but this implementation should not be considered beyond the scope of this application.

Those skilled in the art can clearly understand that, for the convenience and conciseness of the description, the specific operating process of the system, device, and unit described above can refer to the corresponding process in the foregoing method embodiments, which will not be repeated here.

In the several embodiments provided in this application, it should be understood that the disclosed system, device, and method can be implemented in other ways. For example, the device embodiments described above are only illustrative. For example, the division of the units is only a logical function division, and there may be other division methods in actual implementation. For example, a plurality of units or components can be combined or integrated into another system, or some features can be ignored or not implemented. On the other hand, the described or discussed mutual coupling, direct coupling, or communication connection may be indirect coupling or communication connection through some interfaces, devices, or units, and may be in electrical, mechanical, or other forms.

The unit described as a separate component may or may not be physically separated and the component described as a unit may or may not be a physical unit. That is, it may be located in one place, or it may be distributed to multiple network units. Part or all of the units can be selected according to actual needs to achieve the purpose of the solution of the present embodiments.

In addition, each functional unit in each embodiment of the present application may be integrated into one processing unit, or each unit may be physically standalone, or two or more units may be integrated into one unit.

If the function is implemented in the form of a software functional unit and sold or used as an independent product, it can be stored in a computer readable storage medium. Based on this understanding, the technical solution of this application orthe part that contributes to the prior art or the part of the technical solution can be embodied in the form of a software product. The computer software product is stored in a storage medium, including several instructions to enable a computer device (which may be a personal computer, a server, or a network apparatus, etc.) to perform all or part of the steps of the methods described in each embodiment of the present application. The aforementioned storage media includes USB disk, mobile hard disk, read-only memory (ROM), random access memory (RAM), disk, CD, or another medium that can store program code.

The above are only specific embodiments of this application while the scope of protection of this application is not limited to this. Any person skilled in the art can easily think of changes or substitutions within the technical scope disclosed in this application, and those changes or substitutions should be covered within the protection scope of this application. Therefore, the protection scope of this application shall be subject to the protection scope of the claims.

## Claims

1. A wireless communication method, comprising:
a terminal apparatus receiving first information, wherein the first information is used in determining that a media access control control element (MAC CE) is to activate, update, or deactivate spatial relation information of at least one physical uplink control channel (PUCCH) resource or spatial relation information of at least one PUCCH resource group; and
the terminal apparatus activating, updating, or deactivating the spatial relation information of the at least one PUCCH resource according to the MAC CE; or
the terminal apparatus activating, updating, or deactivating the spatial relation information of the at least one PUCCH resource group according to the MAC CE.

2. The wireless communication method of claim 1, wherein the first information is a logical channel identifier (LCID) of the MAC CE.

3. The wireless communication method of claim 1, wherein the first information is a first reserved bit of the MAC CE.

4. The wireless communication method of claim 3, wherein the MAC CE comprises an identifier of a first PUCCH resource, the first reserved bit is used to indicate that the MAC CE is used to activate, update, or deactivate the spatial relation information of the first PUCCH resource, or the first reserved bit is used to indicate that the MAC CE is used to activate, update, or deactivate the spatial relation information of a resource group to which the first PUCCH resource belongs, and the at least one PUCCH resource comprises the first PUCCH resource.

5. The wireless communication method of claim 1, wherein the first information is a second reserved bit of the MAC CE.

6. The wireless communication method of claim 5, wherein the MAC CE comprises a first ID, the second reserved bit is used to indicate that the first ID is an ID of a first PUCCH resource, or the second reserved bit is used to indicate that the first ID is an ID of a first PUCCH resource group, the at least one PUCCH resource comprises the first PUCCH resource, and the at least one PUCCH resource group comprises the first PUCCH resource group;
when the first ID is the ID of the first PUCCH resource, the MAC CE is used to activate, update, or deactivate the spatial relation information of the first PUCCH resource; and
when the first ID is the ID of the first PUCCH resource group, the MAC CE is used to activate, update, or deactivate the spatial relation information of the first PUCCH resource group.

7. The wireless communication method of claim 1, wherein the first information is configuration information;
when the configuration information comprises the at least one PUCCH resource group, the MAC CE is used to activate, update, or deactivate the spatial relation information of the at least one PUCCH resource group; and
when the configuration information doesn't comprise the at least one PUCCH resource group, the MAC CE is used to activate, update, or deactivate the spatial relation information of the at least one PUCCH resource.

8. The wireless communication method of any one of claims 1 to 7, wherein the MAC CE comprises an index of the spatial relation information activated, updated, or deactivated.

9. The wireless communication method of claim 8, wherein the index of the spatial relation information is carried in a field of 6 bits.

10. The wireless communication method of any one of claims 1 to 7, wherein the MAC CE comprises a bitmap of the spatial relation information activated, updated, or deactivated.

11. The wireless communication method of claim 10, wherein the bitmap is one of 64 types of bitmaps included in the MAC CE, the 64 types of bitmaps one-to-one correspond to 64 types of spatial relation information respectively.

12. A wireless communication method, comprising:
sending first information with a network apparatus, wherein the first information is used in determining that a media access control control element (MAC CE) is to activate, update, or deactivate spatial relation information of at least one physical uplink control channel (PUCCH) resource or spatial relation information of at least one PUCCH resource group.

13. The wireless communication method of claim 12, wherein the first information is a logical channel identifier (LCID) of the MAC CE.

14. The wireless communication method of claim 12, wherein the first information is a first reserved bit of the MAC CE.

15. The wireless communication method of claim 14, wherein the MAC CE comprises an identifier of a first PUCCH resource, the first reserved bit is used to indicate that the MAC CE is used to activate, update, or deactivate the spatial relation information of the first PUCCH resource, or the first reserved bit is used to indicate that the MAC CE is used to activate, update, or deactivate the spatial relation information of a resource group to which the first PUCCH resource belongs, and the at least one PUCCH resource comprises the first PUCCH resource.

16. The wireless communication method of claim 12, wherein the first information is a second reserved bit of the MAC CE.

17. The wireless communication method of claim 16, wherein the MAC CE comprises a first ID, the second reserved bit is used to indicate that the first ID is an ID of a first PUCCH resource, or the second reserved bit is used to indicate that the first ID is an ID of a first PUCCH resource group, the at least one PUCCH resource comprises the first PUCCH resource, and the at least one PUCCH resource group comprises the first PUCCH resource group;
when the first ID is the ID of the first PUCCH resource, the MAC CE is used to activate, update, or deactivate the spatial relation information of the first PUCCH resource; and
when the first ID is the ID of the first PUCCH resource group, the MAC CE is used to activate, update, or deactivate the spatial relation information of the first PUCCH resource group.

18. The wireless communication method of claim 12, wherein the first information is configuration information;
when the configuration information comprises the at least one PUCCH resource group, the MAC CE is used to activate, update, or deactivate the spatial relation information of the at least one PUCCH resource group; and
when the configuration information doesn't comprise the at least one PUCCH resource group, the MAC CE is used to activate, update, or deactivate the spatial relation information of the at least one PUCCH resource.

19. The wireless communication method of any one of claims 12 to 18, wherein the MAC CE comprises an index of the spatial relation information activated, updated, or deactivated.

20. The wireless communication method of claim 19, wherein the index of the spatial relation information is carried in a field of 6 bits.

21. The wireless communication method of any one of claims 12 to 18, wherein the MAC CE comprises a bitmap of the spatial relation information activated, updated, or deactivated.

22. The wireless communication method of claim 21, wherein the bitmap is one of 64 types of bitmaps included in the MAC CE, the 64 types of bitmaps one-to-one correspond to 64 types of spatial relation information respectively.

23. A terminal apparatus, comprising:
a communication unit configured to receive first information, wherein the first information is used in determining that a media access control control element (MAC CE) is to activate, update, or deactivate spatial relation information of at least one physical uplink control channel (PUCCH) resource or spatial relation information of at least one PUCCH resource group; and
a processing unit configured to activate, update, or deactivate the spatial relation information of the at least one PUCCH resource according to the MAC CE, or activate, update, or deactivate the spatial relation information of the at least one PUCCH resource group according to the MAC CE.

24. The terminal apparatus of claim 23, wherein the first information is a logical channel identifier (LCID) of the MAC CE.

25. The terminal apparatus of claim 23, wherein the first information is a first reserved bit of the MAC CE.

26. The terminal apparatus of claim 25, wherein the MAC CE comprises an identifier of a first PUCCH resource, the first reserved bit is used to indicate that the MAC CE is used to activate, update, or deactivate the spatial relation information of the first PUCCH resource, or the first reserved bit is used to indicate that the MAC CE is used to activate, update, or deactivate the spatial relation information of a resource group to which the first PUCCH resource belongs, and the at least one PUCCH resource comprises the first PUCCH resource.

27. The terminal apparatus of claim 23, wherein the first information is a second reserved bit of the MAC CE.

28. The terminal apparatus of claim 27, wherein the MAC CE comprises a first ID, the second reserved bit is used to indicate that the first ID is an ID of a first PUCCH resource, or the second reserved bit is used to indicate that the first ID is an ID of a first PUCCH resource group, the at least one PUCCH resource comprises the first PUCCH resource, and the at least one PUCCH resource group comprises the first PUCCH resource group;
when the first ID is the ID of the first PUCCH resource, the MAC CE is used to activate, update, or deactivate the spatial relation information of the first PUCCH resource; and
when the first ID is the ID of the first PUCCH resource group, the MAC CE is used to activate, update, or deactivate the spatial relation information of the first PUCCH resource group.

29. The terminal apparatus of claim 23, wherein the first information is configuration information;
when the configuration information comprises the at least one PUCCH resource group, the MAC CE is used to activate, update, or deactivate the spatial relation information of the at least one PUCCH resource group; and
when the configuration information doesn't comprise the at least one PUCCH resource group, the MAC CE is used to activate, update, or deactivate the spatial relation information of the at least one PUCCH resource.

30. The terminal apparatus of any one of claims 23 to 29, wherein the MAC CE comprises an index of the spatial relation information activated, updated, or deactivated.

31. The terminal apparatus of claim 30, wherein the index of the spatial relation information is carried in a field of 6 bits.

32. The terminal apparatus of any one of claims 23 to 29, wherein the MAC CE comprises a bitmap of the spatial relation information activated, updated, or deactivated.

33. The terminal apparatus of claim 32, wherein the bitmap is one of 64 types of bitmaps included in the MAC CE, the 64 types of bitmaps one-to-one correspond to 64 types of spatial relation information respectively.

34. A network apparatus comprising:
a communication unit configured to send first information, wherein the first information is used in determining that a media access control control element (MAC CE) is to activate, update, or deactivate spatial relation information of at least one physical uplink control channel (PUCCH) resource or spatial relation information of at least one PUCCH resource group.

35. The network apparatus of claim 34, wherein the first information is a logical channel identifier (LCID) of the MAC CE.

36. The network apparatus of claim 34, wherein the first information is a first reserved bit of the MAC CE.

37. The network apparatus of claim 36, wherein the MAC CE comprises an identifier of a first PUCCH resource, the first reserved bit is used to indicate that the MAC CE is used to activate, update, or deactivate the spatial relation information of the first PUCCH resource, or the first reserved bit is used to indicate that the MAC CE is used to activate, update, or deactivate the spatial relation information of a resource group to which the first PUCCH resource belongs, and the at least one PUCCH resource comprises the first PUCCH resource.

38. The network apparatus of claim 34, wherein the first information is a second reserved bit of the MAC CE.

39. The network apparatus of claim 38, wherein the MAC CE comprises a first ID, the second reserved bit is used to indicate that the first ID is an ID of a first PUCCH resource, or the second reserved bit is used to indicate that the first ID is an ID of a first PUCCH resource group, the at least one PUCCH resource comprises the first PUCCH resource, and the at least one PUCCH resource group comprises the first PUCCH resource group;
when the first ID is the ID of the first PUCCH resource, the MAC CE is used to activate, update, or deactivate the spatial relation information of the first PUCCH resource; and
when the first ID is the ID of the first PUCCH resource group, the MAC CE is used to activate, update, or deactivate the spatial relation information of the first PUCCH resource group.

40. The network apparatus of claim 34, wherein the first information is configuration information;
when the configuration information comprises the at least one PUCCH resource group, the MAC CE is used to activate, update, or deactivate the spatial relation information of the at least one PUCCH resource group; and
when the configuration information doesn't comprise the at least one PUCCH resource group, the MAC CE is used to activate, update, or deactivate the spatial relation information of the at least one PUCCH resource.

41. The network apparatus of any one of claims 34 to 40, wherein the MAC CE comprises an index of the spatial relation information activated, updated, or deactivated.

42. The network apparatus of claim 41, wherein the index of the spatial relation information is carried in a field of 6 bits.

43. The network apparatus of any one of claims 34 to 40, wherein the MAC CE comprises a bitmap of the spatial relation information activated, updated, or deactivated.

44. The network apparatus of claim 43, wherein the bitmap is one of 64 types of bitmaps included in the MAC CE, the 64 types of bitmaps one-to-one correspond to 64 types of spatial relation information respectively.

45. A terminal apparatus comprising: a processor and a memory, wherein the memory is configured to store a computer program, and the processor is configured to call and run the computer program stored in the memory to execute the method according to any one of claims 1 to 8.

46. A network apparatus comprising: a processor and a memory, wherein the memory is configured to store a computer program, and the processor is configured to call and run the computer program stored in the memory to execute the method according to any one of claims 9 to 11.

47. A device comprising: a processor configured to call and run a computer program from a memory, enabling an apparatus installed with the chip to execute the method according to any one of claims 1 to 11.

48. A device comprising: a processor configured to call and run computer programs from a memory, enabling an apparatus installed with the chip to execute the method according to any one of claims 12 to 22.

49. A computer readable storage medium configured to store a computer program, wherein the computer program enables a computer to execute the method according to any one of claims 1 to 11.

50. A computer readable storage medium configured to store a computer program, wherein the computer program enables a computer to execute the method according to any one of claims 12 to 22.

51. A computer program product comprising computer program instructions, wherein the computer program instruction enables a computer to execute the method according to any one of claims 1 to 11.

52. A computer program product comprising computer program instructions, wherein the computer program instruction enables a computer to execute the method according to any one of claims 12 to 22.

53. A computer program enabling a computer to execute the method according to any one of claims 1 to 11.

54. A computer program enabling a computer to execute the method according to any one of claims 12 to 22
